# EUROPÄISCHE PATENTSCHRIFT

(11) **EP 2 532 874 B1**
(45) Veröffentlichungstag und Bekanntmachung des Hinweises auf die Patenterteilung: **28.03.2018**
(21) Anmeldenummer: 12180355.5
(22) Anmeldetag: 22.07.2008
(51) Int. Cl.: F02M 31/125, F02M 37/22, B01D 27/06, B01D 29/60, B01D 35/18

(54) **Filterelement und Kraftstofffilter**
Filter element and fuel filter
Élément filtrant et filtre à carburant

(30) Priorität: 27.07.2007 DE 202007010603 U
(43) Veröffentlichungstag der Anmeldung: 12.12.2012
(62) Teilanmeldung aus: 08786299.1
(73) Patentinhaber: MANN + HUMMEL GMBH, 71636 Ludwigsburg (DE)
(72) Erfinder: Rösgen, André, 73630 Remshalden (DE); Jokschas, Günter, 71540 Murrhardt (DE)

(56) Entgegenhaltungen:
- EP-A- 1 087 128
- EP-A1- 1 101 519
- WO-A-03/098011
- DE-A1- 2 721 607
- DE-A1- 3 624 276
- GB-A- 2 140 316
- US-A- 3 235 084

## Beschreibung

### Technisches Gebiet

Die Erfindung betrifft ein Filterelement insbesondere eines Kraftstofffilters für Kraftfahrzeuge mit den Merkmalen nach dem Oberbegriff des Anspruchs 1 sowie einen Kraftstofffilter mit den Merkmalen nach dem Oberbegriff des Anspruchs 6.

### Stand der Technik

Die Fließfähigkeit von Kraftstoff lässt mit sinkenden Temperaturen nach. Insbesondere Dieselkraftstoff neigt bei winterlichen Temperaturen zur Versulzung, was zur Störung der Kraftstoffversorgung des Fahrzeugmotors führen kann. Der versulzte Kraftstoff setzt insbesondere den im Niederdruckkreislauf der Kraftstoffversorgung angeordneten Kraftstofffilter zu, wodurch dessen Durchströmungswiderstand übermäßig ansteigt. Der Antriebsmotor kann nicht mit der erforderlichen Durchflussmenge des Kraftstoffes versorgt werden. Unter Umständen tritt eine vollständige Unterbrechung des Kraftstoffstromes ein.

Zur Vermeidung der vorgenannten Nachteile werden insbesondere bei Diesel-Fahrzeugen beheizte Kraftstofffilter eingesetzt. In vorbekannten Bauformen weist das Filtergehäuse eine integrierte elektrische Heizung auf, die den durchfließenden Kraftstoff erwärmt und dadurch die erwünschte niedrige Viskosität des Kraftstoffes erzeugt. Die Herstellung eines solchen Filtergehäuses ist aufwendig und kostenintensiv. Ein erheblicher Anteil der erzeugten Heizleistung wird zur Erwärmung des Kraftstofffilters bzw. seines Gehäuses eingesetzt. Nur ein Teil der Heizleistung steht für die angestrebte Erwärmung des Kraftstoffes zur Verfügung. Der durchfließende Kraftstoffstrom kommt nur anteilig mit den erwärmten Gehäusewänden in Berührung, so dass eine ungleichmäßige Erwärmung eintritt. Des Weiteren sind Filterelemente mit einem Heizelement z. B. aus GB-A-2 140 31, WO 031098011 A, DE 27 21 607 A1, DE 36 24 276 A1 und EP-A-1 087 128 bekannt.

Der Erfindung liegt die Aufgabe zugrunde, ein gattungsgemäßes Filterelement derart weiterzubilden, dass seine Wirksamkeit verbessert ist.

Diese Aufgabe wird durch ein Filterelement mit den Merkmalen des Anspruchs 1 gelöst.

Der Erfindung liegt des Weiteren die Aufgabe zugrunde, einen gattungsgemäßen Kraftstofffilter derart weiterzubilden, dass ohne Beeinträchtigung der Betriebssicherheit eine kompaktere Bauform erzielbar ist.

Diese Aufgabe wird durch einen Kraftstofffilter mit den Merkmalen des Anspruchs 6 gelöst.

### Offenbarung der Erfindung

Es wird ein Filterelement insbesondere eines Kraftstofffilters für Kraftfahrzeuge vorgeschlagen, welches zum austauschbaren Einsatz in einem Filtergehäuse vorgesehen ist. Das Filterelement umfasst einen Filterkörper mit einem in Falten angeordneten Filtermaterial. Zwischen zwei Falten des Filtermaterials ist ein einzelnes Heizelement für den Kraftstoff mit einer zugeordneten Durchlassöffnung an einer Endscheibe des Filterelements angeordnet. Das Heizelement ist dabei vorteilhaft auf einer Rohseite des Filterkörpers angeordnet. Die erfindungsgemäße Anordnung des Filterkörpers zwischen zwei Falten erfordert weder zusätzlichen Bauraum am Filterelement noch am Filtergehäuse. Das insbesondere elektrische Heizelement liegt direkt im Kraftstoffstrom, so dass eine unmittelbare und deshalb verlustfreie Wärmeübertragung erzielbar ist. Bei kompakter Bauweise kann mit geringer Heizleistung die Fließfähigkeit des Kraftstoffstromes aufrechterhalten werden. Die rohseitige Anordnung des Heizelementes verhindert zuverlässig ein Zusetzen des Filtermaterials. Das insbesondere fest mit dem Filterkörper verbundene Heizelement wird gemeinsam mit dem Filterkörper bei den vorgesehenen Wartungsintervallen ausgetauscht, so dass altersbedingte Funktionsstörungen des Heizelementes vermieden sind. Insgesamt ist die Wirksamkeit des Filterelementes verbessert und damit eine zuverlässige, betriebssichere Kraftstoffversorgung des Antriebsmotors sichergestellt.

Der erfindungsgemäße Kraftstofffilter insbesondere für Kraftfahrzeuge umfasst ein Filtergehäuse und ein vorstehend beschriebenes austauschbares Filterelement. Das Filterelement weist dabei eine Endscheibe mit einer umlaufenden Dichtung zur Abdichtung gegen das Filtergehäuse auf. Zwischen der Endscheibe und einem Deckelteil des Filtergehäuses ist ein Zuströmraum gebildet, in den eine Zuströmleitung mündet. Die Endscheibe weist eine Durchlassöffnung auf, die an das Heizelement angrenzt. Vorteilhaft ist die Durchlassöffnung mit einem hydrodynamischen Leitkörper versehen. Die Endscheibe mit der daran angeordneten Dichtung erzeugt zusammen mit dem Deckelteil des Filtergehäuses einen insgesamt strömungsdichten Zuströmraum, durch den der zuströmende Kraftstoff zur Durchlassöffnung geleitet wird. Insbesondere unter Einwirkung des hydrodynamischen Leitkörpers wird der Kraftstoffstrom durch die Durchlassöffnung hindurch direkt zum Heizelement geleitet. Der Kraftstoffstrom wird insgesamt und homogen auf das erforderliche Maß aufgeheizt, bevor er von der Rohseite durch das Filtermaterial hindurch zur Reinseite hin strömt. Die Bildung von lokalen Stellen mit unzureichend erwärmtem Kraftstoff ist vermieden.

In vorteilhafter Weiterbildung ist das Heizelement gegenüber dem Deckelteil mit einer Dichtung abgedichtet, wobei das Deckelteil eine Kontaktöffnung für elektrische Anschlusskontakte des Heizelementes aufweist. Bei leichter Austauschbarkeit des Filterelementes ist der Kraftstoffstrom zuverlässig von den elektrischen Anschlusskontakten getrennt. Bei Wartungsarbeiten können elektrische Stecker ohne weiteres von den Anschlusskontakten abgezogen bzw. wieder darauf aufgesteckt werden, ohne dass auf die Kraftstoffdichtigkeit geachtet werden muss. Die hierbei durchgeführten Wartungsarbeiten sind unter Vermeidung von Fehlbedienungen einfach durchführbar.

Das Heizelement weist vorteilhaft einen Differenzdrucksensor zur Erfassung eines Differenzdruckes zwischen der Rohseite und der Reinseite des Filterkörpers auf. Insbesondere ist der Differenzdrucksensor zur Regelung einer Elektrokraftstoffpumpe im Niederdruckkreislauf der Kraftstoffversorgung und/oder zur Regelung der Heizleistung des Heizelementes vorgesehen. Der Differenzdruck zwischen Rohseite und Reinseite, der sich infolge des Durchströmungswiderstandes des Filterelementes ausbildet, wird als Maß für die temperaturbedingt veränderliche Viskosität des Kraftstoffes herangezogen. Sofern der ermittelte Differenzdruck infolge eines zu kühlen und deshalb zu viskosen Kraftstoffes unerwünscht ansteigt, kann alternativ oder in Kombination die Förderleistung der Elektrokraftstoffpumpe und/oder die Heizleistung des Heizelementes gesteigert werden. Alternativ zur Regelung kann auch eine Schwellwertsteuerung oder dgl. zweckmäßig sein.

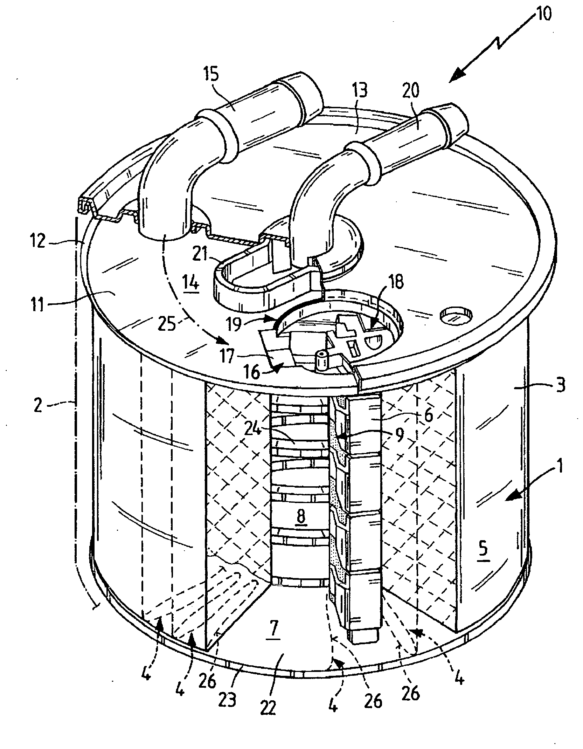

### Kurze Beschreibung der Zeichnung

Ein Ausführungsbeispiel der Erfindung ist nachfolgend anhand der Zeichnung näher beschrieben. Die einzige Figur zeigt in einer teilweise geschnittenen Darstellung einen Diesel-Kraftstofffilter mit einem erfindungsgemäß ausgeführten Filterelement mit integrierter Kraftstoffheizung.

### Ausführungsform der Erfindung

Die einzige Figur zeigt in einer teilweise geschnittenen Darstellung einen erfindungsgemäß ausgeführten Kraftstofffilter 10 eines Kraftfahrzeuges für Dieselkraftstoff. Es können aber auch andere Anwendungen und insbesondere andere Kraftstoffarten vorgesehen sein. Der Kraftstofffilter 10 umfasst ein Filtergehäuse 2, welches mit einem lösbaren Deckelteil 13 verschlossen ist. Im Filtergehäuse 2 ist ein austauschbares Filterelement 1 gehalten, welches in vorgesehenen Wartungsintervallen nach Lösen des Deckelteils 13 entnommen und gegen ein neues Filterelement 1 ersetzt werden kann.

Das Filterelement 1 umfasst einen Filterkörper 3 mit einem in Falten 4 angeordneten Filtermaterial 5. Als Filtermaterial 5 ist Filterpapier vorgesehen. Es können jedoch auch andere Filtermaterialien 5 zweckmäßig sein. Der Verlauf der Falten 4 ist durch gestrichelte Linien 26 angedeutet. Das Filtergehäuse 2 und der Filterkörper 3 sind im Wesentlichen zylindrisch aufgebaut, wobei sich die Falten 4 in radialer Richtung erstrecken und parallel zur Längsachse des zylindrischen Filterelementes 1 bzw. des zylindrischen Filtergehäuses 2 verlaufen. Radial außerhalb des Filtermaterials 5 befindet sich eine Rohseite 7 des Filterelementes 1. Im radial inneren Bereich ist ein etwa zylindrischer Hohlraum vorgesehen, der eine Reinseite 8 des Filterelementes 1 bildet. Im Betrieb wird das Filtermaterial 5 radial von der äußeren Rohseite 7 zur inneren Reinseite 8 hin durchströmt. Hierbei entsteht ein Differenzdruck zwischen der Rohseite 7 und der Reinseite 8, der auf das Filtermaterial 5 radial nach innen einwirkt. Zur Abstützung des Filtermaterials 5 gegen diesen Differenzdruck ist radial innen ein Stützgitter 24 angeordnet.

An seinen beiden Stirnseiten weist der Filterkörper 3 je eine Endscheibe 11, 22 auf, an deren Rändern über den Umfang umlaufende Dichtungen 12, 23 in Form von elastischen Dichtlippen angeordnet sind. Die im Bereich des Deckelteils 13 liegende Dichtung 12 dichtet die Endscheibe 11 sowohl gegenüber dem Filtergehäuse 2 als auch gegenüber dem Deckelteil 13 ab. Die Dichtung 23 der in axialer Richtung gegenüberliegenden Endscheibe 22 liegt dichtend an der inneren Umfangsfläche des Filtergehäuses 2 an. In die dem Deckelteil 13 zugewandte Endscheibe 11 ist eine Durchlassöffnung 16 eingeformt. Die beiden Endscheiben 11, 22 mit ihren Dichtlippen 12, 23, die Umfangswand des Filtergehäuses 2 und der Filterkörper 3 begrenzen einen geschlossenen Ringraum auf der Rohseite 7 des Filterelementes 1, dessen einziger Zugang in der Durchlassöffnung 16 besteht.

Zwischen der Endscheibe 11 und dem Deckelteil 13 ist infolge der umlaufenden Dichtung 12 ein ebenfalls geschlossener Zuströmraum 14 gebildet, in den eine Zuströmleitung 15 mündet. In diesen Zuströmraum 14 wird Kraftstoff durch die Zuströmleitung 15 eingeleitet. Der Kraftstoff strömt entsprechend einem Pfeil 25 durch den Zuströmraum 14 zur Durchlassöffnung 16 und durch diese hindurch in den vorstehend beschriebenen Ringraum der Rohseite 7. Von dort wird der Kraftstoffstrom radial von außen nach innen durch das Filtermaterial 5 hindurch in den radial inneren, die Reinseite 8 bildenden Raum geleitet, von wo aus er durch eine mittige Abströmleitung 20 des Deckelteils 13 abströmt. Zur Trennung des Zuströmraumes 14 von der Abströmleitung 20 ist eine um die Mündung der Abströmleitung 20 umlaufende Dichtung 21 zwischen der Endscheibe 11 und dem Deckelteil 13 angeordnet.

Zwischen zwei Falten 4 des Filtermaterials 5 ist ein elektrisches Heizelement 6 für den Kraftstoff angeordnet. Hierzu sind die beiden angrenzenden Falten 4 in Umfangsrichtung auseinander gespreizt, um hinreichend Platz für das Heizelement 6 zu schaffen. Das Heizelement 6 liegt gegenüber der Umfangskontur des Filterkörpers 3 radial nach innen versetzt und ist mit dem Filterelement 1 fest verbunden. Bei den vorgesehenen Wartungsintervallen ist ein gemeinsamer Austausch des Filterkörpers 3 und des Heizelementes 6 vorgesehen.

Das Heizelement 6 erstreckt sich achsparallel zum Filterkörper 3 zwischen dessen beiden Endscheiben 11, 22. In das Deckelteil 13 und die daran angrenzende Endscheibe 11 ist eine Kontaktöffnung 18 eingeformt, die eine elektrische Steckverbindung mit elektrischen Anschlusskontakten des Heizelementes 6 und eines weiter unten beschriebenen Differenzdrucksensors 9 ermöglicht. Das Heizelement 6 ist gegenüber dem Deckelteil 16 und der Endscheibe 11 mit einer um die Kontaktöffnung 18 umlaufenden Dichtung 19 abgedichtet. Hierdurch sind die elektrischen Anschlusskontakte vom Kraftstofffluss ferngehalten.

Von der Kontaktöffnung 18 dichtend abgeschlossen grenzt die Durchlassöffnung 16 der Endscheibe 11 an das zugeordnete Stirnende des Heizelementes 6 an, wobei der in die Endscheibe 11 eingeformte hydrodynamische Leitkörper 17 eine gesteuerte Anströmung des Heizelementes 6 mit dem durch die Durchlassöffnung 16 eingeleiteten Kraftstoffstrom sicherstellt. Der Kraftstoffstrom wird etwa achsparallel entlang des Heizelementes 6 geführt und dabei aufgeheizt. Anschließend verteilt er sich in dem oben beschriebenen Ringraum der Rohseite 7, bevor er durch das Filtermaterial 5 hindurch radial nach innen zur Reinseite 8 hindurchgeleitet wird. Es ist hier beispielhaft ein einzelnes Heizelement 6 zwischen zwei Falten 4 mit einer zugeordneten Durchlassöffnung 16 dargestellt. Es kann jedoch auch zweckmäßig sein, zwei oder mehr Heizelemente 6 mit einer entsprechenden Anzahl von Durchlassöffnungen 16 vorzusehen.

Das Heizelement 6 ist noch mit einem angedeuteten Differenzdrucksensor 9 versehen, der zur Erfassung eines Differenzdruckes zwischen der Rohseite 7 und der Reinseite 8 des Filterkörpers 3 vorgesehen ist. Der sich bei der Durchströmung des Filterelementes 1 von der Rohseite 7 zur Reinseite 8 hin einstellende Differenzdruck im Kraftstoffstrom wird vom Differenzdrucksensor 9 ermittelt und in einer nicht dargestellten Steuer- bzw. Regeleinheit als Maß für die Viskosität des Kraftstoffes herangezogen. Abhängig vom ermittelten Messwert kann die Förderleistung einer nicht dargestellten Elektrokraftstoffpumpe im Niederdruckkreislauf der Kraftstoffversorgung und/oder die Heizleistung des Heizelementes 6 geregelt bzw. gesteuert werden, um einen hinreichenden Volumenstrom des Kraftstoffes durch den Kraftstofffilter 10 auch bei tiefen Umgebungstemperaturen sicherzustellen.

## Patentansprüche

1. Filterelement (1) insbesondere eines Kraftstofffilters (10) für Kraftfahrzeuge, vorgesehen zum austauschbaren Einsatz in einem Filtergehäuse (2), umfassend einen Filterkörper (3) mit einem in Falten (4) angeordneten Filtermaterial (5), **dadurch gekennzeichnet, dass** ein einzelnes Heizelement (6) für den Kraftstoff zwischen zwei Falten (4) mit einer zugeordneten Durchlassöffnung (16) an einer Endscheibe (11) des Filterelements (1) angeordnet ist.

2. Filterelement nach Anspruch 1, **dadurch gekennzeichnet, dass** das Heizelement (6) auf einer Rohseite (7) des Filterkörpers (3) angeordnet ist.

3. Filterelement nach Anspruch 1 oder 2, **dadurch gekennzeichnet, dass** das Heizelement (6) einen Differenzdrucksensor (9) zur Erfassung eines Differenzdruckes zwischen der Rohseite (7) und einer Reinseite (8) des Filterkörpers (3) aufweist.

4. Filterelement nach Anspruch 3, **dadurch gekennzeichnet, dass** der Drucksensor (9) zur Regelung einer Elektrokraftstoffpumpe im Niederdruckkreislauf der Kraftstoffversorgung und/oder zur Regelung der Heizleistung des Heizelementes (6) vorgesehen ist.

5. Filtergehäuse mit einem Filterelement nach einem der Ansprüche 1 bis 4, **dadurch gekennzeichnet, dass** das Heizelement (6) fest mit dem Filtergehäuse (2) verbunden und zum gemeinsamen Austausch mit diesem vorgesehen ist.

6. Kraftstofffilter (10) insbesondere für Kraftfahrzeuge, umfassend ein Filtergehäuse (2) und ein austauschbares Filterelement (1) nach einem der Ansprüche 1 bis 5, **dadurch gekennzeichnet, dass** das Filterelement (1) eine Endscheibe (11) mit einer umlaufenden Dichtung (12) zur Abdichtung gegen das Filtergehäuse (2) aufweist, wobei zwischen der Endscheibe (11) und einem Deckelteil (13) des Filtergehäuses (2) ein Zuströmraum (14) gebildet ist, in den eine Zuströmleitung (15) mündet, und wobei die Endscheibe (11) eine Durchlaßöffnung (16) aufweist, die an das Heizelement (6) angrenzt.

7. Kraftstofffilter (10) nach Anspruch 6, **dadurch gekennzeichnet, dass** die Durchlaßöffnung (16) mit einem hydrodynamischen Leitkörper (17) versehen ist.

8. Kraftstofffilter nach Anspruch 6 oder 7, **dadurch gekennzeichnet, dass** das Heizelement (6) gegenüber dem Deckelteil (16) mit einer Dichtung (19) abgedichtet ist, wobei das Deckelteil (16) eine Kontaktöffnung (18) für elektrische Anschlußkontakte des Heizelementes (6) aufweist.

## Claims

1. Filter element (1) in particular of a fuel filter (10) for motor vehicles, provided for being replaceably inserted into a filter housing (2), comprising a filter body (3) with a filter material (5) disposed in folds (4), **characterized in that** an individual heating element (6) for the fuel is disposed between two folds (4) with a corresponding passage opening (16) at an end disk (11) of the filter element (1).

2. Filter element according to claim 1, **characterized in that** the heating element (6) is disposed on a raw side (7) of the filter body (3).

3. Filter element according to claim 1 or 2, **characterized in that** the heating element (6) features a differential pressure sensor (9) for detecting a differential pressure between the raw side (7) and a clean side (8) of the filter body (3).

4. Filter element according to claim 3, **characterized in that** the pressure sensor (9) is provided for controlling an electric fuel pump in the low-pressure circuit of the fuel supply and/or for controlling the heat output of the heating element (6).

5. Filter housing with a filter element according to one of the claims 1 to 4, **characterized in that** the heating element (6) is firmly connected to the filter housing (2) and provided for a common replacement therewith.

6. Fuel filter (10) in particular for motor vehicles, comprising a filter housing (2) and a replaceable filter element (1) according to one of the claims 1 to 5, **characterized in that** the filter element (1) features an end disk (11) with a circumferential gasket (12) for sealing against the filter housing (2), wherein an inflow space (14), into which ends an inflow line (15), is formed between the end disk (11) and a cover section (13) of the filter housing (2), and wherein the end disk (11) features a passage opening (16) adjacent to the heating element (6).

7. Fuel filter (10) according to claim 6, **characterized in that** the passage opening (16) is provided with a hydrodynamic conductive body (17).

8. Fuel filter according to claim 6 or 7, **characterized in that** the heating element (6) is sealed with regard to the cover section (16) by means of a gasket (19), wherein the cover section (16) features a contact opening (18) for electrical connectors of the heating element (6).

## Revendications

1. Élément filtrant (1), notamment d'un filtre à carburant (10) pour véhicules automobiles, prévu pour être inséré de manière échangeable dans un boîtier de filtre (2), comprenant un corps de filtre (3) avec un matériau filtrant (5) composé de plis (4), **caractérisé en ce qu**'un élément chauffant (6) individuel pour le carburant est disposé entre deux plis (4) avec une ouverture de passage (16) correspondante sur un disque d'extrémité (11) de l'élément filtrant (1).

2. Élément filtrant selon la revendication 1, **caractérisé en ce que** l'élément chauffant (6) est disposé sur un côté brut (7) du corps de filtre (3).

3. Élément filtrant selon la revendication 1 ou 2, **caractérisé en ce que** l'élément chauffant (6) présente un capteur de pression différentielle (9) destiné à mesurer une pression différentielle entre le côté brut (7) et un côté pur (8) du corps de filtre (3).

4. Élément filtrant selon la revendication 3, **caractérisé en ce que** le capteur de pression (9) est prévu pour réguler une pompe électrique à carburant dans le circuit à basse pression de l'alimentation en carburant et/ou pour réguler la puissance de chauffage de l'élément chauffant (6).

5. Boîtier de filtre avec un élément filtrant selon l'une des revendications 1 à 4, **caractérisé en ce que** l'élément chauffant (6) est relié de manière fixe au boîtier de filtre (2) et prévu à l'échange commun avec ce boîtier.

6. Filtre à carburant (10) notamment pour des véhicules automobiles, comprenant un boîtier de filtre (2) et un élément filtrant (1) échangeable selon l'une des revendications 1 à 5, **caractérisé en ce que** l'élément filtrant (1) est doté d'un disque d'extrémité (11) avec un joint périphérique (12) servant à l'étanchéité par rapport au boîtier de filtre (2), un espace d'admission (14) étant formé entre le disque d'extrémité (11) et une partie de couvercle (13) du boîtier de filtre (2) avec une conduite d'admission (15) débouchant dans cet espace, et le disque d'extrémité (11) présentant une ouverture de passage (16) jouxtant l'élément chauffant (6).

7. Filtre à carburant (10) selon la revendication 6, **caractérisé en ce que** l'ouverture de passage (16) est pourvue d'un corps conducteur (17) hydrodynamique.

8. Filtre à carburant selon la revendication 6 ou 7, **caractérisé en ce que** l'élément chauffant (6) est étanché par un joint (19) par rapport à la partie du couvercle (18), la partie du couvercle (16) présentant une ouverture de contact (18) pour des contacteurs électriques de l'élément chauffant (6).
